# FASCICULE DE BREVET EUROPEEN

(11) **EP 2 574 259 B1**
(45) Date de publication et mention de la délivrance du brevet: **19.03.2014**
(21) Numéro de dépôt: 12185976.3
(22) Date de dépôt: 25.09.2012
(51) Int. Cl.: A47J 27/04

(54) **Cuiseur vapeur avec dispositif de remplissage du réservoir d'eau en cours de cuisson**
Dampfkochtopf mit einer Vorrichtung zum Auffüllen des Wasserbehälters während des Kochens
Steam cooker with device for filling the water tank during cooking

(30) Priorité: 28.09.2011 FR 1158712
(43) Date de publication de la demande: 03.04.2013
(73) Titulaire: SEB S.A., 69130 Ecully (FR)
(72) Inventeur: Dirand, Pascal, 21160 Marsannay-la-Côte (FR); Reiner, Guillaume, 38000 Grenoble (FR)
(74) Mandataire: Cémeli, Eric Philippe Laurent

(56) Documents cités:
- EP-A1- 1 428 462
- EP-A1- 1 815 773
- EP-B1- 1 049 396
- WO-A1-2004/037055
- US-A- 5 893 319

## Description

La présente invention concerne le domaine technique des appareils de cuisson à la vapeur.

Les cuiseurs vapeur comprennent usuellement une enceinte de cuisson disposée sur un socle comportant une base de production de vapeur. La base de production de vapeur comprend un réservoir d'eau et peut disposer ou non d'un moyen de chauffage autonome de l'eau, par exemple un élément chauffant électrique. L'enceinte de cuisson comporte généralement au moins un élément de cuisson fermé par un couvercle. Si désiré, un ou plusieurs éléments de cuisson additionnels peuvent être intercalés entre l'élément de cuisson et le couvercle. Le ou les éléments de cuisson comportent un fond présentant au moins une ouverture prévue pour le passage de la vapeur. Usuellement un élément intermédiaire tel que par exemple un récipient récupérateur à jus est disposé entre la base de production de vapeur et l'élément de cuisson.

Les documents EP1049396 et EP1260164 divulguent des cuiseurs vapeur comportant un socle présentant un dispositif de remplissage du réservoir d'eau permettant le remplissage du réservoir d'eau en cours de cuisson, c'est-à-dire lorsque au moins une partie de l'enceinte de cuisson, par exemple l'un des éléments de cuisson, est disposée sur le socle. Toutefois dans les réalisations proposées les organes de remplissage sont proéminents par rapport au socle, faisant que les éléments de cuisson ne peuvent être retournés sur le socle pour obtenir une configuration de rangement plus compacte que les configurations d'utilisation.

Le document EP1428462 divulgue un cuiseur vapeur, dans lequel les éléments de cuisson gigognes peuvent être retournés sur le socle, pour réduire l'encombrement de l'appareil en configuration de rangement. Le socle comporte de plus un dispositif de remplissage escamotable prévu pour alimenter en eau la base de production de vapeur. Ce dispositif de remplissage se présente sous la forme d'un tiroir pivotant monté sous un récipient récupérateur à jus disposé sur la base de production de vapeur. Le tiroir pivotant peut être partiellement sorti de la paroi latérale du récipient récupérateur à jus en configuration de remplissage, et peut être rentré dans la paroi latérale du récipient récupérateur à jus en configuration de rangement. Un inconvénient de la réalisation précitée réside dans l'assemblage du dispositif de remplissage sur le récipient récupérateur à jus. Un autre inconvénient de la réalisation précitée réside dans la rigidité limitée du dispositif de remplissage, qui peut fléchir si l'utilisateur pose le goulot d'une bouteille sur le bord de l'ouverture de remplissage, surtout si ladite bouteille présente une capacité importante.

Un but de la présente invention est de proposer un cuiseur vapeur comportant un dispositif de remplissage d'un réservoir d'eau agencé dans une base chauffante, dans lequel la construction du dispositif de remplissage est simplifiée.

Un autre but de la présente invention est de proposer un cuiseur vapeur comportant un dispositif de remplissage d'un réservoir d'eau agencé dans une base chauffante, avec lequel le remplissage du réservoir d'eau est facilité.

Un autre but de la présente invention est de proposer un cuiseur vapeur comportant un dispositif de remplissage d'un réservoir d'eau agencé dans une base chauffante, qui présente une configuration de rangement plus compacte que la ou les configurations d'utilisation.

Ces buts sont atteints avec un cuiseur vapeur comportant un socle comprenant une base chauffante prévue pour la production de vapeur et un élément intermédiaire disposé sur la base chauffante, un élément de cuisson disposé sur le socle, et un organe de remplissage prévu pour alimenter un réservoir d'eau agencé dans la base chauffante, du fait que l'organe de remplissage est monté amovible par rapport au socle. Ainsi l'organe de remplissage est monté amovible par rapport à la base chauffante et par rapport à l'élément intermédiaire. Cette disposition permet de simplifier la construction de l'organe de remplissage, de la base chauffante et de l'élément intermédiaire.

Avantageusement, l'élément intermédiaire présente une partie inférieure s'étendant dans le réservoir d'eau, et l'organe de remplissage est inséré entre le réservoir d'eau et la partie inférieure de l'élément intermédiaire. Cette disposition permet de bloquer l'organe de remplissage entre l'élément intermédiaire et la base chauffante.

Selon une forme de réalisation avantageuse, l'organe de remplissage, respectivement le socle, comporte un élément de retenue déformable prévu pour venir en prise avec le socle, respectivement avec l'organe de remplissage, lorsque l'organe de remplissage est monté sur le socle. L'organe de remplissage est ainsi maintenu par rapport au socle. En alternative, l'organe de remplissage peut notamment être porté par le socle.

Selon un mode de réalisation, l'organe de remplissage est porté par l'élément intermédiaire. En alternative, l'organe de remplissage pourrait être porté par la base chauffante.

Avantageusement alors, l'organe de remplissage est inséré dans un logement de l'élément intermédiaire. Cette disposition permet d'assembler de manière simple l'organe de remplissage avec l'élément intermédiaire. En alternative, l'organe de remplissage pourrait être inséré dans un logement de la base chauffante.

Avantageusement alors, l'organe de remplissage, respectivement l'élément intermédiaire, comporte un élément de retenue déformable prévu pour venir en prise avec l'élément intermédiaire, respectivement avec l'organe de remplissage, lorsque l'organe de remplissage est monté sur l'élément intermédiaire. Cette disposition permet de maintenir en position l'organe de remplissage, tout en permettant un retrait aisé de l'organe de remplissage. Une telle construction est de plus économique.

Selon une forme de réalisation, l'organe de remplissage est retenu latéralement par un organe de retenue issu de l'élément intermédiaire et l'élément de retenue déformable est engagé dans une conformation de retenue de l'élément intermédiaire, respectivement de l'organe de remplissage. Ainsi l'organe de remplissage est retenu verticalement par l'élément de retenue déformable et latéralement par l'élément intermédiaire.

Avantageusement alors, l'organe de retenue vient en prise avec un bord supérieur de l'organe de remplissage. Cette disposition permet de simplifier la construction tout en permettant un assemblage facilement compréhensible.

Selon une forme de réalisation avantageuse, l'organe de remplissage forme un conduit débouchant à l'intérieur du réservoir d'eau. Cette disposition permet d'améliorer l'écoulement de l'eau dans le réservoir d'eau.

Selon un mode de réalisation, l'élément intermédiaire forme un récipient récupérateur de jus.

Selon un mode de réalisation, l'élément de cuisson forme un récipient de cuisson comportant une paroi latérale périphérique entourant un fond perforé. Le fond perforé peut être amovible ou non.

Avantageusement alors, la paroi latérale périphérique est susceptible d'envelopper au moins partiellement l'élément intermédiaire lorsque l'élément de cuisson est disposé en position retournée sur l'élément intermédiaire en l'absence de l'organe de remplissage. Ces dispositions permettent de faciliter l'utilisation de l'appareil. Une configuration de rangement compacte peut être obtenue sans compromettre les performances de l'organe de remplissage.

Avantageusement encore, la paroi latérale périphérique est susceptible d'envelopper au moins partiellement le socle lorsque l'élément de cuisson est disposé en position retournée sur le socle en l'absence de l'organe de remplissage. Une configuration de rangement encore plus compacte peut ainsi être obtenue sans compromettre les performances de l'organe de remplissage.

Selon un mode de réalisation, l'élément de cuisson repose sur l'élément intermédiaire. En alternative, l'élément de cuisson pourrait notamment reposer sur la base chauffante, l'élément intermédiaire étant agencé entre la base chauffante et l'élément de cuisson.

Selon un mode de réalisation, la base chauffante comprend un élément chauffant électrique. L'invention n'est toutefois pas limitée aux cuiseurs vapeur électriques.

L'invention sera mieux comprise à l'étude d'un exemple de réalisation, pris à titre nullement limitatif, illustré dans les figures annexées, dans lesquelles :
- la figure 1 est une vue en éclaté et en perspective d'un cuiseur vapeur selon l'invention, dans laquelle l'organe de remplissage est monté sur l'élément intermédiaire,
- la figure 2 est une vue en éclaté et en perspective de l'élément intermédiaire et de l'organe de remplissage,
- la figure 3 est une vue partielle en élévation et en coupe du cuiseur vapeur représenté sur la figure 1, illustré en configuration de cuisson,
- la figure 4 est une vue partielle en élévation et en coupe du cuiseur vapeur représenté sur la figure 1, illustré en configuration de rangement, dans laquelle l'organe de remplissage a été retiré.

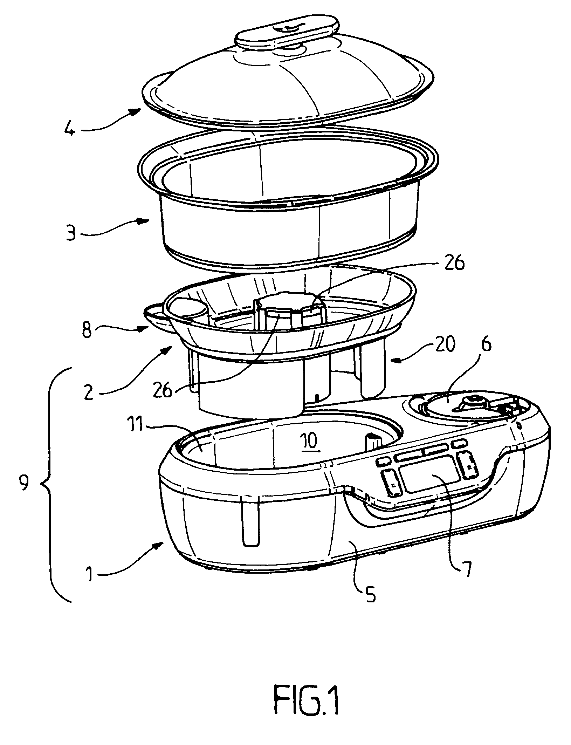

Le cuiseur vapeur illustré sur la figure 1 comporte un socle 9 comprenant une base chauffante 1 prévue pour la production de vapeur et un élément intermédiaire 2 disposé sur la base chauffante 1. Un élément de cuisson 3 est disposé sur le socle 9. Un couvercle 4 est disposé sur l'élément de cuisson 3.

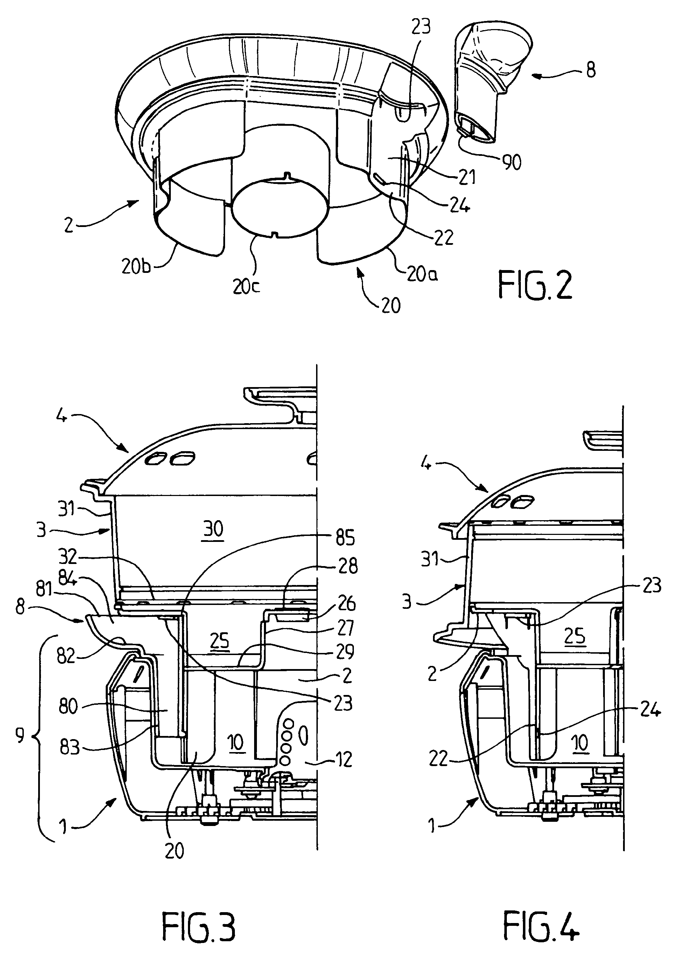

Un réservoir d'eau 10 est agencé dans la base chauffante 1. La base chauffante 1 présente une ouverture supérieure 11 communiquant avec le réservoir d'eau 10. La base chauffante 1 comprend un élément chauffant électrique 12 prévu pour chauffer l'eau contenue dans le réservoir d'eau. Dans l'exemple de réalisation illustré sur dans les figures, l'élément chauffant électrique 12 est agencé dans le réservoir d'eau 10, tel que visible sur la figure 3, pour produire la vapeur nécessaire au fonctionnement du cuiseur vapeur.

Plus particulièrement dans l'exemple de réalisation illustré sur les figures, la base chauffante 1 est agencée dans un boîtier 5 présentant également un siège chauffant 6, tel que visible sur la figure 1. Le siège chauffant 6 est prévu pour recevoir un accessoire saucier (non représenté sur les figures). Le boîtier 5 présente un dispositif de commande 7 prévu pour piloter l'élément chauffant électrique 12 et le siège chauffant 6.

Le cuiseur vapeur illustré sur les figures comporte un organe de remplissage 8 prévu pour alimenter le réservoir d'eau 10 agencé dans la base chauffante 1, tel que montré sur la figure 3. L'organe de remplissage 8 est monté sur le socle 9. L'organe de remplissage 8 est proéminent par rapport à l'élément de cuisson 3, pour permettre le remplissage du réservoir d'eau 10 lorsque l'élément de cuisson 3 est disposé sur le socle 9.

Plus particulièrement selon l'invention, l'organe de remplissage 8 est monté amovible par rapport au socle 9. Tel que visible sur la figure 1, l'organe de remplissage 8 est monté amovible par rapport à la base chauffante 1. Tel que visible sur la figure 2, l'organe de remplissage 8 est aussi monté amovible par rapport à l'élément intermédiaire 2.

Plus particulièrement dans l'exemple de réalisation illustré sur les figures, l'élément de cuisson 3 repose sur l'élément intermédiaire 2. En d'autres termes, l'élément intermédiaire 2 porte l'élément de cuisson 3, tel que visible sur la figure 3.

Tel que mieux visible sur la figure 3, l'élément de cuisson 3 forme un récipient de cuisson 30 comportant une paroi latérale périphérique 31 entourant un fond perforé 32. Le fond perforé 32 est avantageusement amovible.

Tel que mieux visible sur les figures 1 et 3, l'élément intermédiaire 2 forme un récipient récupérateur de jus 25 présentant au moins une ouverture 26 prévue pour le passage de la vapeur issue de l'eau chauffée par l'élément chauffant électrique 12. Les ouvertures 26 sont par exemple agencées en partie supérieure d'une paroi latérale 27 d'une cheminée centrale 28 s'élevant à partir du fond 29 du récipient récupérateur de jus 25.

Tel que montré sur la figure 3, l'élément intermédiaire 2 présente une partie inférieure 20 s'étendant dans le réservoir d'eau 10. La partie inférieure 20 comprend deux nervures 20a, 20b agencées autour d'une couronne 20c. L'organe de remplissage 8 est inséré entre le réservoir d'eau 10 et la partie inférieure 20 de l'élément intermédiaire 2.

L'organe de remplissage 8 forme un conduit 80 débouchant à l'intérieur du réservoir d'eau 10. L'organe de remplissage 8 présente une ouverture de remplissage 81 débouchant au dessus d'une surface d'écoulement 82 alimentant une partie tubulaire 83 formant le conduit 80. Ainsi l'extrémité supérieure de l'organe de remplissage 8 forme un entonnoir 84 facilitant le remplissage.

De plus, l'organe de remplissage 8 comporte un élément de retenue déformable 90 prévu pour venir en prise avec le socle 9 lorsque l'organe de remplissage 8 est monté sur le socle 9.

Dans le mode de réalisation illustré sur les figures, l'organe de remplissage 8 est porté par l'élément intermédiaire 2. Ainsi l'élément de retenue déformable 90 est prévu pour venir en prise avec l'élément intermédiaire 2, lorsque l'organe de remplissage 8 est monté sur l'élément intermédiaire 2.

Plus particulièrement, l'organe de remplissage 8 est inséré dans un logement 21 de l'élément intermédiaire 2. Tel que mieux visible sur la figure 2, le logement 21 est ménagé à l'extérieur de la partie inférieure 20 de l'élément intermédiaire 2. Ainsi l'organe de remplissage 8 est monté sur une paroi extérieure 22 de l'élément intermédiaire 2.

Tel que visible sur la figure 3, l'organe de remplissage 8 est retenu latéralement par un organe de retenue 23 issu de l'élément intermédiaire 2. L'organe de retenue 23 vient en prise avec un bord supérieur 85 de l'organe de remplissage 8. De plus l'élément de retenue déformable 90 est engagé dans une conformation de retenue 24 de l'élément intermédiaire 2, mieux visible sur les figures 2 et 4. La conformation de retenue 24 est par exemple formée par une ouverture traversant la partie inférieure 20 de l'élément intermédiaire 2.

Tel que représenté sur la figure 4, la paroi latérale périphérique 31 est susceptible d'envelopper au moins partiellement l'élément intermédiaire 2 lorsque l'élément de cuisson 3 est disposé en position retournée sur l'élément intermédiaire 2 en l'absence de l'organe de remplissage 8.

Le cuiseur vapeur selon l'invention fonctionne et s'utilise de la manière suivante.

Lorsque l'organe de remplissage 8 est monté sur l'élément intermédiaire 2, l'utilisateur peut aisément ajouter de l'eau dans le réservoir d'eau 10 en cours de cuisson, en versant l'eau dans l'ouverture de remplissage 81 de l'organe de remplissage 8, proéminente par rapport à la paroi latérale périphérique de l'élément de cuisson 3. L'organe de remplissage 8 agencé entre la base chauffante 1 et l'élément intermédiaire 2 est bien maintenu dans le logement 21 et peut être facilement dimensionné pour présenter une rigidité suffisante pour supporter une charge telle que l'appui d'une bouteille d'eau remplie.

L'organe de remplissage 8 peut être retiré du socle 9 pour obtenir une configuration de rangement du cuiseur vapeur plus compacte que la configuration de cuisson. L'organe de remplissage 8 peut aisément être logé entre l'élément intermédiaire 2 et l'élément de cuisson 3. De plus la réalisation de l'élément intermédiaire 2 est facilitée, du fait de la réalisation séparée de l'organe de remplissage 8.

A titre de variante, l'organe de remplissage 8 n'est pas nécessairement porté par l'élément intermédiaire 2. L'organe de remplissage 8 pourrait notamment être porté par la base chauffante 1. Notamment, l'organe de remplissage 8 pourrait être inséré dans un logement de la base chauffante 1, ledit logement ménageant au moins une ouverture ou un passage prévu pour l'écoulement de l'eau dans le réservoir d'eau 10.

A titre de variante, l'élément de retenue déformable 90 n'est pas nécessairement prévu pour venir en prise avec l'organe de remplissage 8. L'élément de retenue déformable 90 peut être prévu pour venir en prise avec la base chauffante 1, lorsque lorsque l'organe de remplissage 8 est monté sur la base chauffante 1.

A titre de variante, l'élément de retenue déformable 90 n'appartient pas nécessairement à l'organe de remplissage 8. Le socle 9 peut comporter un élément de retenue déformable 90 prévu pour venir en prise avec l'organe de remplissage 8, lorsque l'organe de remplissage 8 est monté sur le socle 9. Notamment, l'élément intermédiaire 2 peut comporter un élément de retenue déformable prévu pour venir en prise avec l'organe de remplissage 8, lorsque l'organe de remplissage 8 est monté sur l'élément intermédiaire 2 ; la base chauffante 1 peut comporter un élément de retenue déformable prévu pour venir en prise avec l'organe de remplissage 8, lorsque l'organe de remplissage 8 est monté sur la base chauffante 1. Ainsi l'élément de retenue déformable peut être engagé dans une conformation de retenue du socle 9, c'est-à-dire dans une conformation de retenue de l'élément intermédiaire 2 ou de la base chauffante 1.

A titre de variante, l'élément de cuisson 3 ne repose pas nécessairement sur l'élément intermédiaire 2. L'élément de cuisson 3 peut notamment reposer sur la base chauffante 1.

A titre de variante, l'élément intermédiaire 2 ne forme pas nécessairement un récipient récupérateur de jus. L'élément intermédiaire 2 pourrait notamment former un support de cuisson.

A titre de variante, l'élément de cuisson 3 ne forme pas nécessairement un récipient de cuisson 30. L'élément de cuisson 3 pourrait notamment former un support de cuisson.

La présente invention n'est nullement limitée à l'exemple de réalisation décrit et à ses variantes, mais englobe de nombreuses modifications dans le cadre des revendications.

## Revendications

1. Cuiseur vapeur comportant un socle (9) comprenant une base chauffante (1) prévue pour la production de vapeur et un élément intermédiaire (2) disposé sur la base chauffante (1), un élément de cuisson (3) disposé sur le socle (9), et un organe de remplissage (8) prévu pour alimenter un réservoir d'eau (10) agencé dans la base chauffante (1), **caractérisé en ce que** l'organe de remplissage (8) est monté amovible par rapport au socle (9).

2. Cuiseur vapeur selon la revendication 1, **caractérisé en ce que** l'élément intermédiaire (2) présente une partie inférieure (20) s'étendant dans le réservoir d'eau (10) et **en ce que** l'organe de remplissage (8) est inséré entre le réservoir d'eau (10) et la partie inférieure (20) de l'élément intermédiaire (2).

3. Cuiseur vapeur selon l'une des revendications 1 ou 2, **caractérisé en ce que** l'organe de remplissage (8), respectivement le socle (9), comporte un élément de retenue déformable (90) prévu pour venir en prise avec le socle (9), respectivement avec l'organe de remplissage (8), lorsque l'organe de remplissage (8) est monté sur le socle (9).

4. Cuiseur vapeur selon l'une des revendications 1 à 3, **caractérisé en ce que** l'organe de remplissage (8) est porté par l'élément intermédiaire (2).

5. Cuiseur vapeur selon la revendication 4, **caractérisé en ce que** l'organe de remplissage (8) est inséré dans un logement (21) de l'élément intermédiaire (2).

6. Cuiseur vapeur selon l'une des revendications 4 ou 5, **caractérisé en ce que** l'organe de remplissage (8), respectivement l'élément intermédiaire (2), comporte un élément de retenue déformable (90) prévu pour venir en prise avec l'élément intermédiaire (2), respectivement avec l'organe de remplissage (8), lorsque l'organe de remplissage (8) est monté sur l'élément intermédiaire (2).

7. Cuiseur vapeur selon la revendication 6, **caractérisé en ce que** l'organe de remplissage (8) est retenu latéralement par un organe de retenue (23) issu de l'élément intermédiaire (2) et **en ce que** l'élément de retenue déformable (90) est engagé dans une conformation de retenue (24) de l'élément intermédiaire (2), respectivement de l'organe de remplissage (8).

8. Cuiseur vapeur selon la revendication 7, **caractérisé en ce que** l'organe de retenue (23) vient en prise avec un bord supérieur (85) de l'organe de remplissage (8).

9. Cuiseur vapeur selon l'une des revendications 1 à 8, **caractérisé en ce que** l'organe de remplissage (8) forme un conduit (80) débouchant à l'intérieur du réservoir d'eau (10).

10. Cuiseur vapeur selon l'une des revendications 1 à 9, **caractérisé en ce que** l'élément intermédiaire (2) forme un récipient récupérateur de jus.

11. Cuiseur vapeur selon l'une des revendications 1 à 10, **caractérisé en ce que** l'élément de cuisson (3) forme un récipient de cuisson (30) comportant une paroi latérale périphérique (31) entourant un fond perforé (32).

12. Cuiseur vapeur selon la revendication 11, **caractérisé en ce que** la paroi latérale périphérique (31) est susceptible d'envelopper au moins partiellement l'élément intermédiaire (2) lorsque l'élément de cuisson (3) est disposé en position retournée sur l'élément intermédiaire (2) en l'absence de l'organe de remplissage (8).

13. Cuiseur vapeur selon l'une des revendications 11 ou 12, **caractérisé en ce que** la paroi latérale périphérique (31) est susceptible d'envelopper au moins partiellement le socle (9) lorsque l'élément de cuisson (3) est disposé en position retournée sur le socle (9) en l'absence de l'organe de remplissage (8).

14. Cuiseur vapeur selon l'une des revendications 1 à 13, **caractérisé en ce que** l'élément de cuisson (3) repose sur l'élément intermédiaire (2).

15. Cuiseur vapeur selon l'une des revendications 1 à 14, **caractérisé en ce que** la base chauffante (1) comprend un élément chauffant électrique (12).

## Patentansprüche

1. Dampfgarer mit einem Sockel (9) mit Heizsockel (1) für die Erzeugung von Dampf und einem Zwischenelement (2), welches auf dem Heizsockel (1) aufgesetzt ist, einem Garelement (3), welches auf den Sockel (9) aufgesetzt ist, einer Befüllvorrichtung (8) zum Befüllen eines Wasserbehälters (10), der sich an den Heizsockel (1) anschließt, **dadurch gekennzeichnet, dass** die Befüllvorrichtung (8) vom Sockel (9) abnehmbar angebracht ist.

2. Dampfgarer nach Anspruch 1, **dadurch gekennzeichnet, dass** das Zwischenelement (2) ein Unterteil (20) aufweist, welches sich über den Wasserbehälter (10) erstreckt und dass die Befüllvorrichtung (8) zwischen dem Wasserbehälter (10) und dem Unterteil (20) des Zwischenelements (2) eingesetzt wird.

3. Dampfgarer nach einem der Ansprüche 1 oder 2, **dadurch gekennzeichnet, dass** die Befüllvorrichtung (8) bzw. der Sockel (9) ein verformbares Rückhalteelement (90) umfasst, welches der Verankerung mit dem Sockel (9) bzw. mit der Befüllvorrichtung (8) dient, wenn die Befüllvorrichtung (8) auf den Sockel (9) aufgesetzt wird.

4. Dampfgarer nach einem der Ansprüche 1 bis 3, **dadurch gekennzeichnet, dass** die Befüllvorrichtung (8) vom Zwischenelement (2) gehalten wird.

5. Dampfgarer nach Anspruch 4, **dadurch gekennzeichnet, dass** die Befüllvorrichtung (8) in ein Gehäuse (21) des Zwischenelements (2) eingesetzt wird.

6. Dampfgarer nach einem der Ansprüche 4 oder 5, **dadurch gekennzeichnet, dass** die Befüllvorrichtung (8) bzw. das Zwischenelement (2) ein verformbares Rückhalteelement (90) umfasst, welches der Verankerung mit dem Zwischenelement (2) bzw. mit der Befüllvorrichtung (8) dient, wenn die Befüllvorrichtung (8) auf das Zwischenelement (2) aufgesetzt wird.

7. Dampfgarer nach Anspruch 6, **dadurch gekennzeichnet, dass** die Befüllvorrichtung (8) seitlich durch einen Rückhaltekörper (23) gehalten wird, welcher aus dem Zwischenelement (2) herausragt, und dass das verformbare Rückhalteelement (90) in einer Rückhalteanformung (24) des Zwischenelements (2) bzw. der Befüllvorrichtung (8) verriegelt wird.

8. Dampfgarer nach Anspruch 7, **dadurch gekennzeichnet, dass** der Rückhaltekörper (23) mit einer Oberkante (85) der Befüllvorrichtung (8) verankert wird.

9. Dampfgarer nach einem der Ansprüche 1 bis 8, **dadurch gekennzeichnet, dass** die Befüllvorrichtung (8) einen Kanal (80) formt, der in den Innenraum des Wasserbehälters (10) mündet.

10. Dampfgarer nach einem der Ansprüche 1 bis 9, **dadurch gekennzeichnet, dass** das Zwischenelement (2) einen Auffangbehälter für Saft formt.

11. Dampfgarer nach einem der Ansprüche 1 bis 10, **dadurch gekennzeichnet, dass** das Garelement (3) einen Garbehälter (30) formt, der eine seitlich umlaufende Wand (31) umfasst, die einen durchlochten Boden (32) umschließt.

12. Dampfgarer nach Anspruch 11, **dadurch gekennzeichnet, dass** die seitlich umlaufende Wand (31) so beschaffen ist, dass sie das Zwischenelement (2) mindestens teilweise einschließt, wenn das Garelement (3) umgekehrt auf das Zwischenelement (2) ohne Befüllvorrichtung (8) aufgesetzt wird.

13. Dampfgarer nach einem der Ansprüche 11 oder 12, **dadurch gekennzeichnet, dass** die seitlich umlaufende Wand (31) so beschaffen ist, dass sie den Sockel (9) mindestens teilweise einschließt, wenn das Garelement (3) umgekehrt auf den Sockel (9) ohne Befüllvorrichtung (8) aufgesetzt wird.

14. Dampfgarer nach einem der Ansprüche 1 bis 13, **dadurch gekennzeichnet, dass** das Garelement (3) auf dem Zwischenelement (2) aufliegt.

15. Dampfgarer nach einem der Ansprüche 1 bis 14, **dadurch gekennzeichnet, dass** der Heizsockel (1) ein elektrisches Heizelement (12) umfasst.

## Claims

1. Steam cooker comprising a stand (9) including a heating base (1) intended for producing steam and an intermediate element (2) placed on the heating base (1), a cooking element (3) placed on the stand (9), and a filling device (8) intended for supplying water to a water tank (10) arranged in the heating base (1), **characterised in that** the filling device (8) is removably mounted with respect to the stand (9).

2. Steam cooker according to claim 1, **characterised in that** the intermediate element (2) has a lower part (20) extending in the water tank (10) and **in that** the filling device (8) is inserted between the water tank (10) and the lower part (20) of the intermediate element (2).

3. Steam cooker according to claim 1 or 2, **characterised in that** the filling device (8), respectively the stand (9), comprises a deformable retaining element (90) adapted to engage with the stand (9), respectively with the filling device (8), when the filling device (8) is mounted on the stand (9).

4. Steam cooker according to one of claims 1 to 3, **characterised in that** the filling device (8) is supported by the intermediate element (2).

5. Steam cooker according to claim 4, **characterised in that** the filling device (8) is inserted in a housing (21) of the intermediate element (2).

6. Steam cooker according to claim 4 or 5, **characterised in that** the filling device (8), respectively the intermediate element (2), comprises a deformable retaining element (90) adapted to engage with the intermediate element (2), respectively with the filling device (8), when the filling device (8) is mounted on the intermediate element (2).

7. Steam cooker according to claim 6, **characterised in that** the filling device (8) is retained laterally by a retaining device (23) from the intermediate element (2) and **in that** the deformable retaining element (90) is engaged in a retaining conformation (24) of the intermediate element (2), respectively of the filling device (8).

8. Steam cooker according to claim 7, **characterised in that** the retaining device (23) engages with an upper edge (85) of the filling device (8).

9. Steam cooker according to one of claims 1 to 8, **characterised in that** the filling device (8) forms a duct (80) opening out inside the water tank (10).

10. Steam cooker according to one of claims 1 to 9, **characterised in that** the intermediate element (2) forms a juice recovery recipient.

11. Steam cooker according to one of claims 1 to 10, **characterised in that** the cooking element (3) forms a cooking recipient (30) comprising a peripheral side wall (31) surrounding a perforated bottom (32).

12. Steam cooker according to claim 11, **characterised in that** the peripheral side wall (31) can enclose at least partially the intermediate element (2) when the cooking element (3) is arranged upside down on the intermediate element (2) when the filling device (8) is not present.

13. Steam cooker according to claim 11 or 12, **characterised in that** the peripheral side wall (31) can enclose at least partially the stand (9) when the cooking element (3) is arranged upside down on the stand (9) when the filling device (8) is not present.

14. Steam cooker according to one of claims 1 to 13, **characterised in that** the cooking element (3) rests on the intermediate element (2).

15. Steam cooker according to one of claims 1 to 14, **characterised in that** the heating base (1) comprises an electrical heating element (12).
